# EUROPEAN PATENT SPECIFICATION

(11) **EP 3 165 405 B1**
(45) Date of publication and mention of the grant of the patent: **29.08.2018**
(21) Application number: 15193330.6
(22) Date of filing: 06.11.2015
(51) Int. Cl.: B60R 11/00, B60R 11/02, B64D 11/00, F16M 11/24

(54) **ARTICULATION TYPE SUPPORTER FOR SEAT OF A MEANS OF TRANSPORTATION**
GELENKARTIGER TRÄGER FÜR EINEN SITZ IN EINEM VERKEHRSMITTEL
SUPPORT À ARTICULATION POUR SIÈGE DE MOYEN DE TRANSPORT

(43) Date of publication of application: 10.05.2017
(73) Proprietor: Dayou Holdings Co., Ltd., Gwangju 62384 (KR)
(72) Inventor: YU, Sun Woong, Incheon 22167 (KR); KIM, Sang Hyun, Seongnam-si, Gyeonggi-do 13391 (KR)
(74) Representative: Geurts, Franciscus Antonius

(56) References cited:
- GB-A- 2 470 798
- US-A- 6 012 693
- US-A1- 2005 140 191
- US-A1- 2009 127 897
- US-A1- 2011 278 885

## Description

### TECHNICAL FIELD

The present invention relates to an articulation type supporter for seat of a means of transportation, and in particular to an articulation type supporter for seat of a means of transportation which makes it possible to stably support an article even against any change in an anterior-posterior distance between seats wherein the device of the present invention may be installed on a backside of a seat installed in front of a seated passenger in an anterior-posterior direction seat arrangement and can contact close to a backside of a seat based on the folding of arms which occurs with the aid of an articulation unit, thus being stored or when in use the arms are unfolded.

### BACKGROUND ART

Terminals, for example, a navigation device, a PMP (Portable Media Player), a PDA (Personal Digital Assistants), a DMB (Digital Multimedia Broadcasting) player, a MP3 (MPEG audio layer-3) player, an electronic dictionary, a cellular phone, etc. are made compact-sized, and each function of such devices are integrated.

The above-mentioned terminal becomes easier to carry thanks to compactness and lightness, whereupon there has been a technical try to use them from the use in a home or an office to the use in a transportation means, for example, a vehicle, an airplane, etc.

As one of the representative examples, there is a support device configured to support a terminal, for example, a portable terminal, a navigation device, etc. during the driving of a vehicle.

A conventional support device in general is configured to be fixedly attached on a dashboard of a vehicle or on the surface of a front windshield using a vacuum adsorption method, an adhesive, etc. There are not enough technologies so far on the development of a technology which may allow to provide any convenience to passenger seated in a back seat in an anterior-posterior seat arrangement of a transportation means, for example, a vehicle or an airplane.

The article generally used by a person seated in a backseat is a portable terminal including a tablet PC, a document, a book, etc., not a terminal, for example, a navigation device, etc. which is generally used for convenience when driving.

However, in case of a transportation means, for example, a vehicle, an airplane, a ship, a train, etc., for example, in case of a vehicle, a passenger who is seated in a seat which is arranged behind a driver's seat or a passenger seat beside the driver's seat generally looks toward the backside of a forward seat (front seat), and a passageway is formed at either side of the above seat and is narrow, whereupon there is not any space for installing a support device which is configured to support an article. There may be any inconvenience in terms of use and space applicability.

An article may be fixed on a backside of a front seat or an article may be placed on a temporal shelf made in a contractible type on a backside of a front seat. In this case, a passenger who is seated on a backseat may feel hard to adjust a distance (a distance defined for the sake of an easier handling of a tablet PC, etc. or a distance for a user to read a book or document) to the article depending on a habit of each passenger, and since the front seat is designed to lean backward a little, the posture of a passenger who is seated on a backseat should inevitably change, whereupon the passenger may feel inconvenience when in use.

In addition, if a support device is installed on a backside of a front seat so as to support an article, the safety of passenger should be considered by referring to an occasion, for example, a collision of a transportation means.

In addition, in order to be placed on a front side of a passenger who is seated in a backseat from a seat backside of a front seat, it is necessary to provide an interval adjusting function between them. In addition to the above interval adjusting, it is necessary to stably maintain a spaced distance from a seat backside and a state where an article is stably supported with respect to a physical operation due to any crash halt or any vibrations on an unpaved road and the weight of an article.

### [Documents of Prior Art]

### [Patent Documents]

Korean patent registration publication number 1321016 (October 16, 2013)
Korean utility model publication number 20-1997-0001241 (January 21, 1997)

US2005/140191 discloses an articulate type supporter according to the preamble of claim 1.

GB2470798 discloses a support mechanism for a portable navigation device, having a first arm and a second arm that is adjustable with respect to the first arm to position the navigation device.

### DISCLOSURE OF THE INVENTION

Accordingly, it is an object of the present invention to provide an articulation type supporter for seat of a means of transportation, as in claim 1, which in generally is installed on a backside of a front seat of a transportation means, for example, a vehicle, an airplane, a ship, a train, etc. When such a device is necessary to be stored, the device can be stored by folding on a backside of the front seat. When in use, the folded arms can be unfolded. The device of the present invention can stably support an article with respect to the weight of an article and any change in a spaced distance and any physical operation, for example, vibrations due to movement of a movement means. The passenger may be protected from any danger, for example, a collision, with respect to an article from collisions of a movement means.

To achieve the above object, there is provided an articulation type supporter for seat of a means of transportation, which may include, but is not limited to, a fixing bracket installed on a backside of a seat of a vehicle, an airplane, a ship, a train, etc; a swivel unit installed at the fixing bracket and rotatable in a horizontal direction; a first arm one end of which is connected through a first hinge unit to the swivel unit and is rotatable in a upward and downward direction, and the other end of which includes a second hinge unit; and a second arm one end of which is connected rotatable in an upward and downward direction to the first arm through the second hinge unit, wherein the other end thereof is connected to a backside of a support plate, and since the first arm and the second arm can be folded with the aid of the horizontal direction rotation and the upward and downward direction rotations, the position of the support plate can be freely adjusted.

The seat of a vehicle may equip with a locking unit which allows to lock the device on a backside of the vehicle or to unlock the locked state in a state where the first arm and the second arm and the support plate are folded.

The fixing bracket is configured in such a way that an inner bracket is engaged in the inside of an outer bracket. The outer bracket may include a shaft insertion unit formed at one side, and an engaging unit formed at the other side and extending from the shaft insertion unit.

The inner bracket may include a shaft support unit having a shaft support hole on the top thereof, and the fastening unit having an fastening hole may be bent from the bottom of the shaft support unit.

The swivel unit may include, but is not limited to, a swivel shaft which passes through the shaft support hole and is inserted into the shaft insertion unit with the swivel shaft being supported by the shaft support unit; a disk spring which is inserted into the swivel shaft in order for the swivel shaft to be elastically rotatable in a horizontal direction; a washers inserted into the swivel shaft; and a fluted nut which is engaged to an end of the swivel shaft and is inserted into the shaft insertion unit.

A back cover may be installed on a back surface of a seat of the vehicle. The back cover may include a mounting groove which allows the support plate to mount on the top of the backside while not being exposed to the outside. The mounting groove may include an arm insertion groove into which the first arm and the second arm can be inserted, and a bracket insertion groove into which the fixing bracket can be inserted.

The first arm may includes a through hole at a previously designed position and may further include a first cover; a second cover engaged with the first cover; and a first driving frame fixed between the first cover and the second cover.

A mounting shoulder may be formed on an outer surface of the top of the first cover, wherein the second arm contacts close and can be mounted on the mounting shoulder.

The other end of the second arm may be connected through a ball joint to the support plate, and a ball mount having a ball may be installed on the support plate, and a ball accommodation unit to which the ball is engaged may be formed at the other end of the second arm.

The second arm may include a ring and may further include a first cover; a second cover engaged with the first cover; and a second driving frame fixed between the first cover and the second cover.

The locking unit may include, but is not limited to, a locker which is installed elastically rotatable at the mounting bracket of the base frame provided at the seat of the vehicle; a push rod which is installed slidable at an inner side surface of the seat of the vehicle so as to unlock the locked locker by selectively rotating the locker; and a push button which is installed elastic at a side surface of the seat of the vehicle so as to pressurize the push rod.

The first hinge unit includes a first connection member connected to the swivel unit and installed at an end of one side of the first arm; a first clutch bearing installed at the first connection member in such a way that if a weight applies to the first arm, the rotation of the first arm is prevented in the direction of the weight while corresponding to the weight, and the rotation of the first arm is permitted in the opposite direction; a first hinge shaft which passes through the center of the first clutch bearing; a first bridge which is inserted into the first hinge shaft and is connected with the first arm; and a first brake unit (stopping unit) configured in such a way that if a force smaller than a previously set weight applies, the rotation of the first arm is prevented in the direction of the weight, and if a force larger than a previously set weight applies, the rotation of the first arm is permitted in the direction of the weight.

The first brake unit may include, but is not limited to, disk spring which is inserted into the first hinge shaft and allows to elastically pressurize the first bridge; the washer which is inserted into the first hinge shaft so as to prevent any abrasion; and a first fluted nut which is engaged to an end of the first hinge shaft.

The second hinge unit may include, but is not limited to, a second connection member which is formed at an end of the other side of the second arm; a second hinge shaft which is engaged to the center of the second connection member; a second bridge which is inserted into the second hinge shaft and is connected with the second arm; and a second brake unit configured in such a way that if a force smaller than a previously set weight applies, the rotation of the second arm is prevented in the direction of the weight, and if a force larger than a previously set weight applies, the rotation of the second arm is permitted in the direction of the weight.

The second brake unit may include, but is not limited to, second disk spring which is inserted into the second hinge shaft and allows to elastically pressurize the second bridge; the washer which is inserted into the second hinge shaft so as to reduce abrasion; and a second fluted nut which is engaged to an end of the second hinge shaft.

### INDUSTRIAL EFFECTS

The device according to the present invention is installed on a backside of a seat arranged in front of a user. When it needs to store, the device can be stored folded on a backside of a seat of a vehicle. When in use, the device can be used after the folded arms are unfolded. The article can be stably supported with the aid of a clutch bearing with respect to the direction where the weight of the article applies, with respect to any change in a distance spaced apart from the supported article and any vibrations occurring due to the movements of a moving means including a vehicle.

In addition, the stored arms can be stably maintained against any collision of a moving means with the aid of a locking part, and the arms can be folded in such a way to reduce any impacts if the arms collide with an articulation type article support device including a supported article even when the passenger seated in the backseat leans forward, thus obtaining a safety of a passenger.

### BRIEF DESCRIPTION OF THE DRAWINGS

Figures 1A to 1C are perspective views illustrating an installation state of an articulation type supporter for seat of transportation according to an exemplary embodiment of the present invention, an upward and downward rotation relationship and a horizontal rotation relationship of first and second arms, and a relationship of a spherical motion wherein an article performs with the aid of a ball joint from an end portion of a second arm;
Figure 2 is a disassembled perspective view for describing the components of an articulation type supporter for seat of transportation and an engaged relationship of the components as illustrated in Figure 1A;
Figure 3 is a disassembled perspective view illustrating the components of a swivel unit in Figure 2 and an engaged relationship of the components;
Figure 4 is a perspective view illustrating a state wherein each component of the swivel unit in Figure 3 and an engaged state of each component;
Figure 5 is a cross sectional view schematically illustrating a configuration when viewing from a side surface with respect to a longitudinal direction in Figure 4; Figures 6A and 6B are cross sectional views taken along lines I-I and II-II in Figure 4;
Figure 7 is a perspective view illustrating the inside of a back cover when viewing it from a front direction of a seat;
Figure 8 is a plane view of the configuration in Figure 7; and
Figure 9 is a side cross sectional view for describing the components of a locking unit and the operation of each component according to the present invention.

### MODES FOR CARRYING OUT THE INVENTION

The terms and words used in the present specification and claims should be interpreted as a meaning and concept which correspond to a technical concept of the present invention based on a principle "an inventor can properly define the concept of a term so as to describe his invention in the best way", not limiting to a conventional or dictionary meaning.

In addition, the exemplary embodiments in the present specification and the components illustrated in the drawings are just a preferred exemplary embodiment of the present invention, not representing all the technical concepts of the present invention. Such embodiments should be understood in such a way that there may be various equivalents and modifications which may substitute such concepts at the time the present application is filed.

In addition, the front side and backside or forward side and backward side of each component during the description of the present invention may be defined in such a way that in the arrangement of seats, the direction where a passenger looks forward may be defined as a front side or a forward side, and the opposite direction may be defined as a backside or a backward side.

In addition, the direction of weight represents a direction where the load of weight being applied from the upper side to the lower side applies, and the opposite direction represents a direction of the force occurring when a user lifts up a support from the lower side to the upper side.

In addition, the rotation in a horizontal direction may be defined as a swivel rotation, and a component related with such a swivel rotation is called a swivel unit, and the rotation in the upward and downward directions is referred to as a hinge rotation during the description.

In terms of the component having a predetermined length and its connection relationship, the descriptions on an end (one side) and the other end (the other side) may be provided in such a way that an end in the direction wherein a fixing bracket is installed or its direction is referred to as one side, and the end in the opposite direction or its direction is referred to as the other side.

The preferred exemplary embodiments of the present invention will be described with reference to the accompanying drawings.

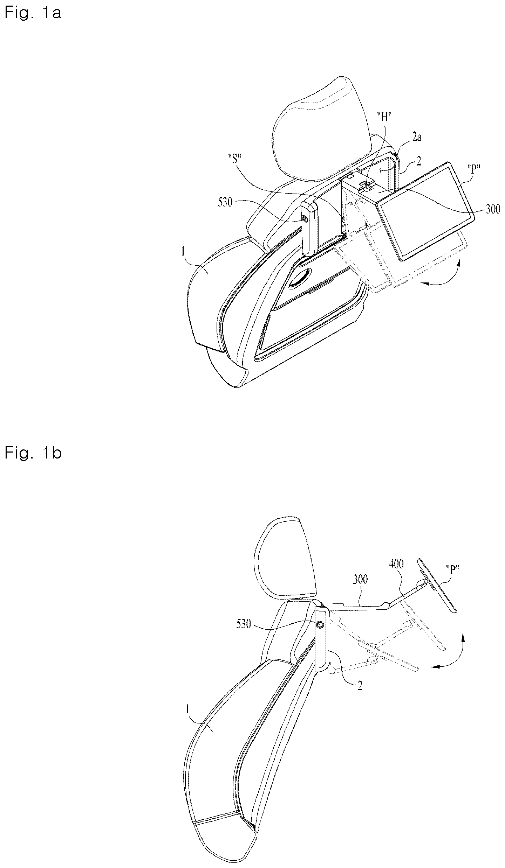

Referring to Figures 1A and 1B, the articulation type supporter for seat of transportation according to an exemplary embodiment of the present invention may be installed on a backside of a seat 1 so as to stable support an article (a portable electronic device, a book, etc.) and is able to stably support such an article against the weight of the supported article and any change in a distance spaced apart to the seat 1.

In addition, a back cover 2 installed on a backside of the seat 1 may be provided integrated with the seat 1 as a part of the seat 1 or may be a component which is separately injected.

In Figures 1A and 1B, there is shown a change in a position adjustment of a support plate "P" using a hinge rotation (upward and downward directions).

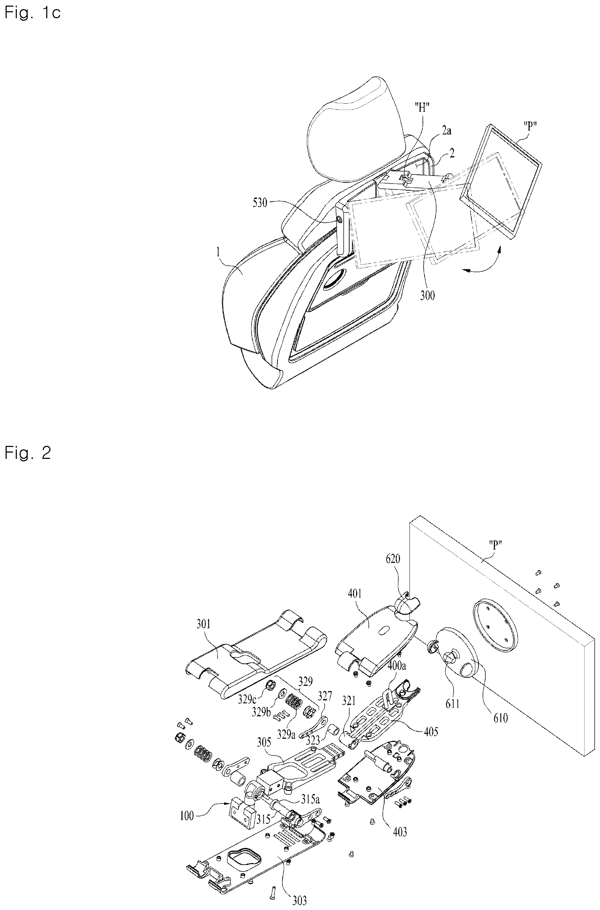

In Figure 1C, there is shown an installation state of an articulation type supporter for seat of transportation according to an exemplary embodiment of the present invention while showing a change in a position adjustment of a support plate "P" using a swivel rotation (horizontal rotation) and a change in the tilting with the aid of a ball joint which will be described later.

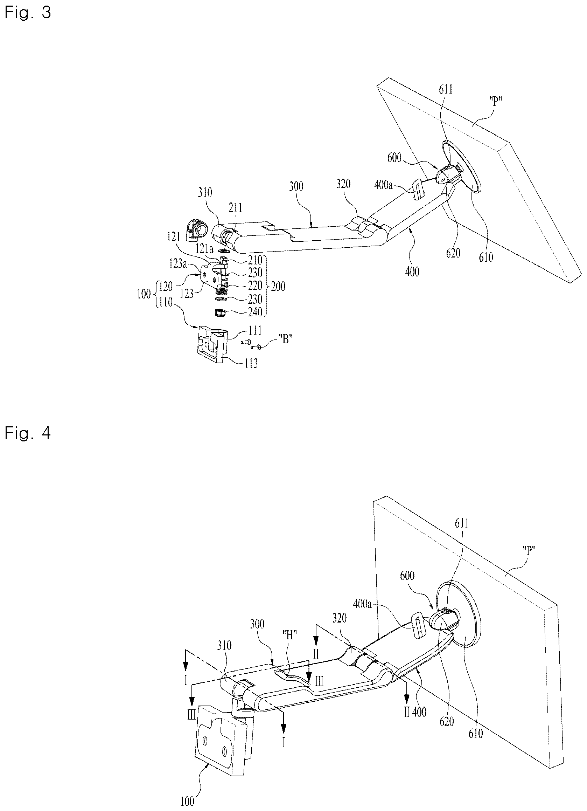

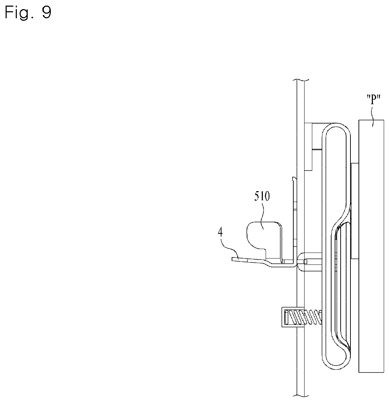

Referring to Figures 1A to 9, the articulation type supporter for seat of transportation according to an exemplary embodiment of the present invention will be described.

The articulation type supporter for seat of transportation according to an exemplary embodiment of the present invention may include, but is not limited to, a fixing bracket 100 installed on a backside of a seat 1; a swivel unit 200 installed rotatable in a horizontal direction at the fixing bracket 100; a first arm 300 one end of which is connected through a first hinge unit 310 to the swivel unit 200 in such a way to be rotatable upward and downward, and the other end of which includes a second hinge unit 320; and a second arm 400 one end of which is connected rotatable in an upward and downward direction to the first arm 300 through the second hinge unit 320, and the other end of which is connected to a backside of a support plate "P".

The articulation type supporter for seat of transportation according to an exemplary embodiment of the present invention may be configured in such a way that the rotations and folding operations of the first arm 300 and the second arm 400 are available based on the horizontal rotation and upward and downward rotations, and the position of the support plate "P" can be freely adjusted.

In addition, the seat 1 may include a locking unit 500 so as to lock the device on a backside of the seat 1 or unlock the locked device, with the first arm 300, the second arm 400 and the support plate "P" being folded.

More detail, a locking part is provided at first arm 300 and/or second arm 400 in the direction of the back cover 2 of the seat 1, and a locking unit 500 is installed at the seat 1 including the back cover 2 corresponding to the locking part so as to fix a state where the locking part is aligned at a previously set position and is placed or so as to remove the fixed state.
At this time, the fixing of the locking unit 500 with respect to the locking part is performed in a state where the support plate "P" is aligned inside the accommodation unit and is placed, that is, the first arm 300, the second arm 400 and the support plate "P" being folded.
In addition, the locking part is formed in a ring or hook shape protruding from the surface of the second arm 400 facing the first arm 300.

In the embodiment of according to the present invention will be described the locking and unlocking of the locking unit 500, which is presents a ring 400a formed on the second arm 400.

Mean while, the fixing bracket 100 may be configured in such a way that an inner bracket 120 is engaged to the inside of an outer bracket 110. A shaft insertion unit 111 is formed at one side of the outer bracket 110, and an engaging unit 113 formed extending from the shaft insertion unit 111 formed at the other side thereof.

In addition, at the top of the inner bracket 120, a shaft support unit 121 having a shaft support hole 121a is formed. At the bottom of the shaft support unit 121, an fastening unit 123 having an fastening hole 123a bent.

Accordingly, the inner bracket 120 is inserted into the inside of the outer fixing bracket 110 and is fastened with a bolt "B".

The swivel unit 200 is a device for rotating the support plate "P" in a horizontal direction and include, but is not limited to, a swivel shaft 210; at least one disk spring 220; a plurality of washers 230; and a fluted nut 240.

The swivel shaft 210 passes through the shaft support hole 121a and is inserted into the shaft insertion unit 111 in a state where the swivel shaft 210 is being supported by the shaft support unit 121.

The disk spring 220 is inserted into the swivel shaft 210 in order for the swivel shaft 210 to elastically rotate in a horizontal direction.

The washer 230 is inserted into the swivel shaft 210 and is disposed at both sides of the disk spring 220.

The fluted nut 240 is fastened to an end of the swivel shaft 210 and is inserted into the shaft insertion unit 111 together with the swivel shaft 210 after it is engaged.

The back cover 2 installed on a backside of the seat 1 is a plastic injected component, which is having accommodation unit, and accommodation unit may include, but is not limited to, a mounting groove 2a on an upper side of the backside thereof in order for the support plate "P" not to be exposed to the outside when folding, and in the mounting groove 2a, there may be provided an arm insertion groove 2b into which the first arm 300 and the second arm 400 can be inserted, and a bracket insertion groove 2c into which the fixing bracket 100 can be inserted.

The first arm 300 includes a through hole "H" at a previously designed position and may include, but is not limited to, a first cover 301; a second cover 303 engaged to the first cover 301; and a first driving frame 305 fixed between the first cover 301 and the second cover 303.

On an outer surface of the top of the first cover 301, there may be formed a mounting shoulder 301a in which the second arm 400 may contact close and mount.

The other end of the second arm 400 may be connected to the support plate "P" through a ball joint 600, as an embodiment illustrated in Figure 2, at a front surface of support plate "P", a ball mount 610 having a ball 611 is installed, and at the other end of the second arm 400, a ball accommodation unit 620 to which the ball 611 is engaged may be formed.

In addition, although not illustrated in Figure, as other embodiment, a ball mount 610 having a ball 611 installed at the other end of the second arm 400, and a ball accommodation unit 620 to which the ball 611 is engaged may be formed on a front surface of the support plate "P". At this time, a ball 611 may include globular shape or polynedron shape.

The second arm 400 include a ring 400a as a the locking unit and may further include, but is not limited to, a first cover 401; a second cover 403 engaged to the first cover 401; and a second driving frame 405 fixed between the first cover 401 and the second cover 403.

The locking unit 500 allows the first arm 300 and the second arm 400 and the support plate "P" to be reliably attached on the back cover 2 of the seat 1 when the support plate "P" is stored in the mounting groove 2a by folding the first arm 300 and the second arm 400.
At this time, the first arm 300 includes a through hole though which a part of the locking part, that is a part of ring 400a passes through, wherein the locking part faces when folding the second arm 400 about the second hinge unit 320.

The locking unit 500 may include, but is not limited to, a locker 510 locked by the ring 400a and an operation unit, selectively rotates the locker 510 to controlling the locking of locker 510 and ring 400a; operation unit may include, but is not limited to, a push rod 520; and a push button 530 which pressurizes the push rod 520.

Preferably, the locker 510 formed in a ring or hook shape.

And, a torsion spring 512 may be installed on a rotary shaft 511 of the locker 510, whereupon the elastic force of the torsion spring 512 can always be supplied to the ring 400a in the direction where the locker 510 is always locked.

The locker 510 may be installed elastically rotatable on the mounting bracket 4 of the base frame 3 disposed at the seat 1 so as to be locked with the ring 400a.

The push rod 520 is installed slidable on an inner surface of the seat 1 so as to unlock the locked state of the locker 510 by selectively rotating the locker 510.

The push button 530 is elastically installed on a side surface of the seat 1 in such a way to pressurize the push rod 520.

On a backside of the seat 1, more specifically, at the arm insertion groove 2b formed on a backside of the back cover 2, a spring "S" (refer to Figure 1A) is installed so as to elastically support the first arm 300, whereupon a user can easily take out the support plate "P" by providing an elastic force in order for the support plate "P" to protrude outward a little when unlocking the locked state of the locker 510.

The operation of the locking unit 500 will be described. When it needs to store the support plate "P" inside the mounting groove 2a by folding the first arm 300 and the second arm 400, the ring 400a of the second arm 400 is elastically engaged to the locker 510 with the aid of the torsion spring 512.

Meanwhile, if it needs to take out the support plate "P" out of the mounting groove 2a, the push button 530 is pressed, and the push rod 520 slides by the push button 530.

At this time, the push rod 520 pressurizes the locker 510. The locker 510 rotates about the rotary shaft 511 by overwhelming the elastic force of the torsion spring 512, whereupon the locking between the locker 510 and the ring 400a is unlocked.

At the same time, the support plate "P" can protrude a little outward by means of the spring "S" (refer to Figure 1), so the user can easily take out the support plate "P".

The first hinge unit 310 allows to rotate upward and downward the first arm 300 (hinged rotation) with respect to the fixing bracket 100 and may include, but is not limited to, the first connection member 311 which is connected to the swivel shaft 210 of the swivel unit 200 and is installed at one side end of the firstarm 300; a first clutch bearing 313 installed at the first connection member 311; a first hinge shaft 315 which passes through the center of the first clutch bearing 313; a first bridge 317 which is inserted into the first hinge shaft 315 and is connected to the first hinge arm 300; and a first bracket unit (stopping unit) 319.

The first connection member 311 is connected to a head 211 of the swivel shaft 210 and at the same time is connected to an end of one side of the first arm 300, whereupon the first arm 300 can be rotatable in a horizontal direction and upward and downward directions.

The first connection member 311 formed in a single pipe-shaped, wherein the pipe formation is horizontal, may be connected to the head 211 of the swivel shaft 210 in an insert injection way.

The first clutch bearing 313 may be installed in the first connection member 311 in such a way that if a weight applies to the first arm 300 (for example, if an article is placed on the support plate "P"), the rotation of the first arm 300 is prevented in the direction (downward direction) of the weight with respect to the applying weight, and the rotation of the first arm 300 is permitted in the opposite direction (upward direction).

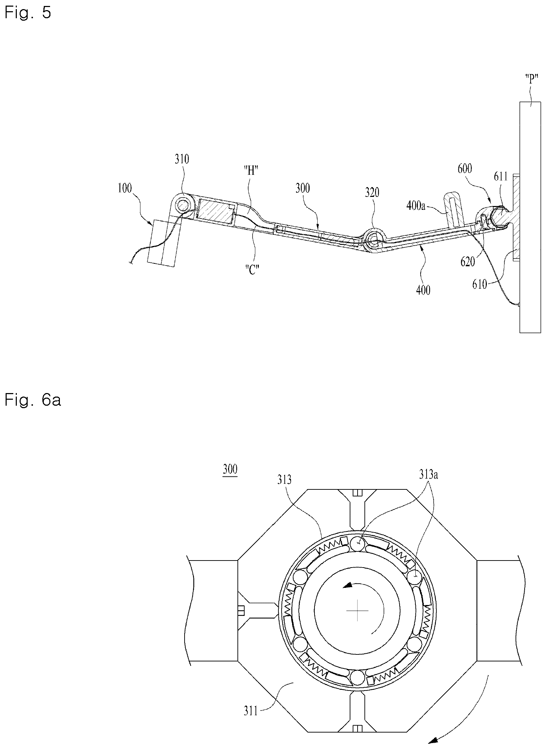

The clutch bearing is a known component, and for the understanding of the operation of the present invention, the operation principle of the first clutch bearing 313 will be schematically described with reference to Figure 6A.

The first clutch bearing 313 is installed in the first connection member 311, and the first hinge shaft 315 positions in the center of the first clutch bearing 313. If the first arm 300 receives a force which allows a rotation in the arrow direction, since a needle roller 313a of the first clutch bearing 313 does not have any effect on the first hinge shaft 315, the first arm 300 can rotate.

However, in the opposite direction, the needle roller 313a of the first clutch bearing 313 pressurizes the first hinge shaft 315, whereupon the rotation of the first arm is prevented, thus stably supporting the article placed on the support plate "P".

The first hinge shaft 315 passes through the center of the first clutch bearing 313 and is inserted inside the first connection member 311, and a stopper unit 315a formed in the center is disposed hooked by the shoulder 311a.

A first bridge 317 has one end which is inserted into the first shaft 315 and the other end is connected to the first driving frame 305 of the first hinge arm 300.

The first brake unit 319, as a stopping unit may be configured in such a way that if a force smaller than the previously set weight (for example, the weight of the article placed on the support plate) applies, the first arm 300 does not rotate in the direction of weight (by the operation of the first clutch bearing). If a force larger than the previously set weight applies (the force that the user presses the first arm downward so as to adjust the position of the support plate), the first arm 300 can rotate in the direction of the weight (downward direction).

The first brake unit 319 may include, but is not limited to, at least one first disk spring 319a which is inserted in the first hinge shaft 315 and elastically pressurizes the first bridge 317; a plurality of washers 319b which are inserted in the first hinge shaft 315 so as to prevent any abrasion; and a first fluted nut 319c which is engaged to an end of the first hinge shaft 315.

The washers 319b are provided in pair and have flat surfaces in order for the facing surfaces to slide with respect to each other and are made of a material which has a wear resistance and durability.

In other words, the washers 319b have a relation of compression with respect to each other with the aid of elastic force from the first disk spring 319a and are interposed between components which may rotate slidable in such a way that any component among the facing components can rotate slidable from another component, thus providing a function of a flat washer which may substitute any friction relationship between them.

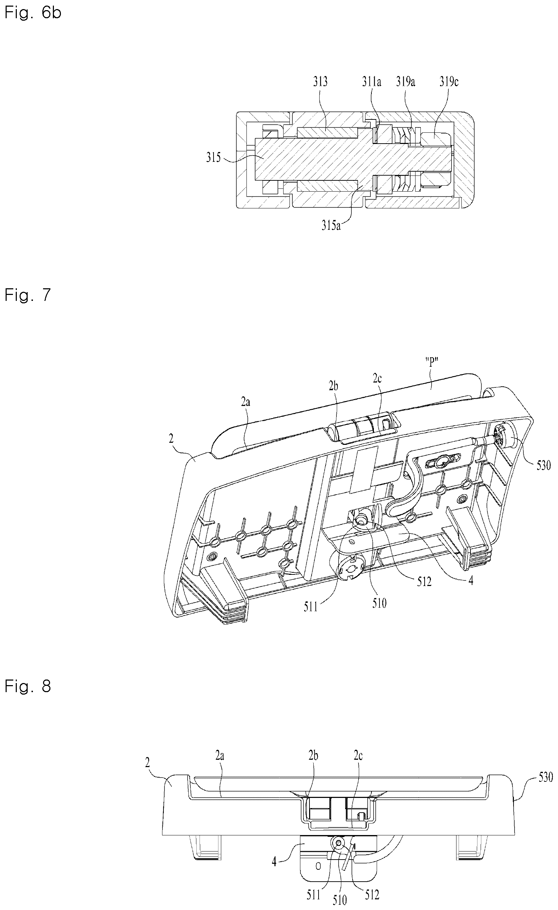

Referring to Figure 6B, the operation of the first brake unit 319 will be described.

As mentioned earlier, with the aid of the first clutch bearing 313, the first arm 300 is always rotatable in an upward direction so as to enough support the weight of the article placed on the support plate "P", but its rotation in a downward direction is limited.

When a user applies a force, namely, the force which is larger than the weight of the article to the first arm 300 so as to adjust the position of the support plate "P", since the first hinge shaft 315 is compressed against the first bridge 317 by means of the first disk spring 319a and the fluted nut 319c, the first arm 300 can rotate in a downward direction together with the first bridge 317 with respect to the first hinge shaft 315.

The second hinge unit 320 allows to rotate the second arm 400 in upward and downward directions (hinge rotation) with respect to the first arm 300 and may include, but is not limited to, a second connection member 321 formed at an end of the other side of the second arm 400; a second hinge shaft 325 engaged to the center of the second connection member 321; a second bridge 327 which is inserted into the second hinge shaft 325 and is connected to the second arm 400; and a second brake unit 329.

The second connection member 321 is formed integral at an end of one side of the second arm 400.

The second clutch bearing 323 is installed in the second connection member 321 in such a way that if a weight applies to the second arm 400 (for example, an article is placed on the support plate "P"), the rotation of the second arm 400 is prevented in the direction of weight (downward direction) in response to the weight thereof, and the rotation of the second arm 400 is permitted in the opposite direction (upward direction).

The second hinge shaft 325 is inserted into the second connection member 321, and the stopper unit 325a formed at its center is hooked by the shoulder 321a.

The second bridge 327 may include one end inserted in the second hinge shaft 325 and the other end connected through a bolt "B" to the second arm 400.

Here, the second brake unit 329 is configured in such a way that if a force smaller than a previously set weight applies (weight of an article placed on the support plate), the rotation of the second arm 400 is prevented in the direction of the weight (downward direction), but if a force larger than a previously set weight (the force that a user presses the second arm downward so as to adjust the position of the support plate) applies, the second arm 400 can rotate in the direction of weight (downward direction) .

The second brake unit 329 may include, but is not limited to, one or more second disk spring 329a which is inserted in the second hinge shaft 325 and elastically pressurizes the second bridge 327; a plurality of washers 329b inserted into the second hinge shaft 325 so as to reduce abrasion; and a second fluted nut 329c which is engaged to an end of the second hinge shaft 325. The washers 319b are provided in pair and have flat surfaces in order for the facing surfaces to slide with respect to each other and are made of a material having wear resistance and durability.

The washers 329b are compressed to each other with the aid of an elastic force from the second disk spring 329a and are disposed between components wherein any component among the facing components rotates slidable from the other component, thus obtaining a function of a flat washer which may substitute a friction relationship between them.

Since the second brake unit 329 operates same as the operation principle of the first brake unit 319, the operation of the second brake unit 329 will be omitted.

Referring to Figures 1A and 1B, the above articulation type supporter for seat of transportation is able to adjust in upward and downward direction the position of the support plate "P" using a hinge connection structure of the first arm 300 and the second arm 400, and the angle can be freely adjusted using a ball joint 600.

Referring to Figure 1C, the support plate "P" can be rotated in a horizontal direction using a swivel unit.

In addition, when the device of the present invention is stored, it is folded and stored on a backside of a seat of the vehicle. When in use, the device can be used by unfolding the folded arms. The device can stably support the article even through there is any change in the weight of the article which is supported, and a spaced-apart distance.

In addition, the reference character "C" which is not described represents a cable connected with an article through the articulation type support device of the present invention from the inside of the seat, and the installation of the cable "C", as illustrated in Figure 5, may be connected through the insides of the first arm 300 and the second arm 400, but it is not limited thereto. On the surface of each of the first and second arms 300 and 400, a groove (not shown) may be formed so as to insert the cable "C". The cable "C" may be arranged not to protrude through the groove, the application of which may be considered an easy way to a person having ordinary skill in the art.

**[Legend of Reference Numbers]**

| | |
|---|---|
| 1: seat | 2: back cover |
| 2a: mounting groove | 2b: arm insertion groove |
| 2c: bracket insertion groove | 3: base frame |
| 4: mounting bracket | 100: fixing bracket |
| 110: outer bracket | 111: shaft insertion unit |
| 113: engaging unit | 120: inner bracket |
| 121: shaft support unit | 121a: shaft support hole |
| 123: fastening unit | 123a: fastening hole |
| 200: swivel unit | 210: swivel shaft |
| 220: disk spring | 230: washer |
| 240: fluted nut | 300: first arm |
| 301: first cover | 301a: mounting shoulder |
| 303: second cover | 305: first driving frame |
| 310: first hinge unit | 311: the first connection member |
| 311a: shoulder | 313: first clutch bearing |
| 313a: needle roller | 315: first hinge shaft |
| 315a: stopper unit | 317: first bridge |
| 319: first brake unit | 319a: first disk spring |
| 319b: washer | 319c: first fluted nut |
| 320: second hinge unit | 321: second connection member |
| 321a: shoulder | 323: second clutch bearing |
| 325: second hinge shaft | 325a: stopper unit |
| 327: second bridge | 329: second brake unit |
| 329a: second disk spring | 329b: washer |
| 329c: second fluted nut | 329b: washer |
| 400: second arm | 400a: ring |
| 401: first cover | 403: second cover |
| 405: second driving frame | 500: locking unit |
| 510: locker | 511: rotary shaft |
| 512: torsion spring | 520: push rod |
| 530: push button | 600: ball joint |
| 611: ball | 610: ball mount |
| 620: ball accommodation unit | B: bolt |
| H: through hole | P: support plate |
| S: spring | |

## Claims

1. An articulation type supporter for seat of a means of transportation, comprising:
a fixing bracket (100) which is at a base frame (3) which forms a seat (1);
a back cover (2) which allows the top of the fixing bracket (100) to be exposed to the outside, and including an accommodation unit, wherein the back cover (2) is formed at a backside of the seat (1);
a swivel unit (200) which is installed on the top of the fixing bracket (100) and is arranged rotatable in a horizontal direction, **characterized in that** the supporter furthermore comprises
a first arm (300) one end of which is connected through a first hinge unit (310) to the swivel unit (200) which protrudes to the top of the fixing bracket (100) and the other end of which is arranged rotatable in upward and downward directions;
a second arm (400) one end of which is connected through a second hinge unit (320) to the other end of the first arm (300), whereupon the other end of which can be folded or unfolded on the first arm while being rotatable upward and downward; and
a support plate (P) the front side of which is connected through a ball joint (600) to the other end of the second arm (400), wherein an article is supported on a backside thereof, and
wherein the first hinge unit (310) is configured in such a way that includes:
a first connection member (311) which is connected with the top of the swivel shaft (210) protruding toward the top of the fixing bracket (100) and is installed at an end of one side of the first arm (300), the first connection member (311) formed in a single pipe-shape wherein the direction of the pipe formation is horizontal;
a first clutch bearing (313) which is installed at the first connection member (311) in such a way that if a weight applies to the first arm (300), the rotation of the first arm (300) is prevented in the direction of the weight while corresponding to the weight, and the rotation of the first arm (300) is permitted in the opposite direction,
a first hinge shaft (315) which is arranged passing through the center of the first clutch bearing (313),
a first bridge (317) which is inserted into the first hinge shaft (315) and is connected with the first arm (300), and
a first brake unit (319) which is configured in such a way that if a force smaller than a previously set weight applies, the rotation of the first arm (300) is prevented in the direction of the weight, and if a force larger than a previously set weight applies, the rotation of the first arm (300) is permitted in the direction of the weight.

2. The device of claim 1, wherein a locking part is provided at the first arm (300) and/or the second arm (400) in the direction of the back cover (2) of the seat, and a locking unit (500) is installed at the seat (1) including the back cover (2) corresponding to the locking part so as to fix a state where the locking part is aligned at a previously set position and is placed or so as to remove the fixed state, and the fixing of the locking unit (500) with respect to the locking part is performed in a state where the support plate (P) is aligned inside the accommodation unit and is placed.

3. The device of claim 1, wherein the fixing bracket (100) is formed based on an engagement of an outer bracket (110) and an inner bracket (120), and the outer bracket (110) includes a shaft insertion unit (111) open upward, and an engaging unit (113) is formed communicating with the shaft insertion unit (111) in the direction corresponding to the base frame (3), and the inner bracket (120) includes a shaft support (121) unit having a shaft support hole (121a) passing through upward and downward on the top while corresponding to the opening of the shaft insertion unit (111); and an fastening unit (123) which is bent downward at a front side of the shaft support unit (121) and is formed at a portion facing the base frame (3) in a covering shape while corresponding to the engaging unit (113), and the swivel unit (200) includes a swivel shaft (210) the lower side of which passes through the shaft support hole (121a) and is supported by the shaft support unit (121) and the shaft insertion unit (111); at least one disk spring which is inserted from the lower side into the swivel shaft (210); a washer which is installed at the swivel shaft (210) between the disk spring (220) and the lower surface of the shaft support unit (121); and a fluted nut which is fastened in a direction from the lower side of the swivel shaft (210) to a portion being opposite to the lower surface of the shaft support unit (121).

4. The device of claim 2, wherein the accommodation unit includes an accommodation groove which allows a support plate (P) to be inserted into the top of a backside of the back cover (2) in order for the support plate (P) not to be exposed to the outside, and in the accommodation groove, there are formed an arm insertion groove (2b) into which a first arm (300) and a second arm (400) are inserted folded, and a bracket insertion groove (2c) into which the fixing bracket (100) is inserted.

5. The device of claim 4, wherein the locking part is formed in a ring or hook shape protruding from the surface of the second arm (400) facing the first arm (300) when being folded, and the first arm (300) includes a through hole though which a part of the locking part passes through, wherein the locking part faces when folding the second arm (400) about the second hinge unit (320), and the locking unit (500) is installed at a lower side of the fixing bracket (100) and at the base frame (3) at an inner side of the arm insertion groove (2b) and includes a hook or ring shaped locker which is locked or unlocked from the locking part since and elastically rotates in response to an operation wherein the locking part is placed at a predetermined set position; and an operation unit which is connected with the locker and is installed at the seat (1) in such a way to unlock the locked locker with respect to the locking part by selectively rotating the locker based on a user's operation.

6. The device of claim 1, wherein the ball joint (600) is configured in such a way that a ball mount having a ball-shaped portion is formed on a front surface of the support plate (P), and there is provided a ball accommodation unit (620) which is shaped to surround a part of the ball-shaped portion of the ball mount or the ball joint (600) is configured in such a way that a ball mount having a ball-shaped portion is formed at the other end of the second arm (400), and there is provided a ball accommodation unit (620) which is formed on a front surface of the support plate (P) and is shaped to surround a part of the ball-shaped portion of the ball mount.

7. The device of claim1, wherein the first brake unit (319) is configured in such a way that includes:
a first disk spring (319a) which is inserted into the first hinge shaft (315) and allows to elastically pressurize the first bridge (317);
a washer (319b) which is inserted into the first hinge shaft (315) so as to prevent any abrasion; and
a first fluted nut (319c) which is fastened to an end of the first hinge shaft (315).

8. The device of claim 1, wherein the second hinge unit (320) includes:
a second connection member (321) which is formed at an end of the other side of the second arm (400),
a second hinge shaft (325) which is engaged to the center of the second connection member (321),
a second bridge (327) which is inserted into the second hinge shaft (325) and is connected with the second arm (400), and
a second brake unit (329) configured in such a way that if a force smaller than a previously set weight applies, the rotation of the second arm (400) is prevented in the direction of the weight, and if a force larger than a previously set weight applies, the rotation of the second arm (400) is permitted in the direction of the weight.

9. The device of claim 8, wherein the second brake unit (329) includes:
a second disk spring (329a) which is inserted into the second hinge shaft (325) and allows to elastically pressurize the second bridge (327),
a washers (329b) which are inserted into the second hinge shaft (325) so as to reduce abrasion, and
a second fluted nut (329c) which is engaged to an end of the second hinge shaft.

## Patentansprüche

1. Gelenkartiger Träger für einen Sitz in einem Verkehrsmittel, umfassend:
einen Fixierbügel (100), der an einem Basisrahmen (3) vorhanden ist, der einen Sitz (1) bildet;
eine Rückabdeckung (2), die zulässt, dass das Oberteil des Fixierbügels (100) nach außen freigelegt ist, und eine Aufnahmeeinheit umfasst, wobei die Rückabdeckung (2) an einer Rückseite des Sitzes (1) gebildet ist;
eine Schwenkeinheit (200), die oben auf dem Fixierbügel (100) montiert ist und drehbar in einer horizontalen Richtung angebracht ist, **dadurch gekennzeichnet, dass** der Träger ferner umfasst:
einen ersten Arm (300), dessen eines Ende durch eine erste Gelenkeinheit (310) mit der Schwenkeinheit (200) verbunden ist, die zu der Oberseite des Fixierbügels (100) hervorsteht, und dessen anderes Ende drehbar in der Aufwärts- und Abwärtsrichtung angebracht ist;
einen zweiten Arm (400), dessen eines Ende durch eine zweite Gelenkeinheit (320) mit dem anderen Ende des ersten Arms (300) verbunden ist, wobei dessen anderes Ende auf dem ersten Arm gefaltet oder entfaltet werden kann, während es aufwärts und abwärts drehbar ist; und
eine Trägerplatte (P), deren Vorderseite durch ein Kugelgelenk (600) mit dem anderen Ende des zweiten Arms (400) verbunden ist, wobei ein Gegenstand auf einer Rückseite davon getragen ist, und
wobei die erste Gelenkeinheit (310) derart ausgestaltet ist, dass sie umfasst:
ein erstes Verbindungselement (311), das mit dem Oberteil der Schwenkachse (210) verbunden ist, das zu der Oberseite des Fixierbügels (100) hin hervorsteht und an einem Ende einer Seite des ersten Arms (300) montiert ist, wobei das erste Verbindungselement (311) in einer einzelnen Rohrform ausgebildet ist, wobei die Richtung der Rohrformation horizontal ist;
ein erstes Kupplungslager (313), das an dem ersten Verbindungselement (311) derart montiert ist, dass, wenn ein Gewicht an dem ersten Arm (300) anliegt, die Drehung des ersten Arms (300) in der Richtung des Gewichts verhindert wird, während er dem Gewicht entspricht, und die Drehung des ersten Arms (300) in der entgegengesetzten Richtung zugelassen ist,
eine erste Gelenkachse (315), die so angebracht ist, dass sie durch die Mitte des ersten Kupplungslagers (313) verläuft,
eine erste Brücke (317), die in die erste Gelenkachse (315) eingeführt ist und mit dem ersten Arm (300) verbunden ist, und
eine erste Bremseinheit (319), die derart ausgestaltet ist, dass, wenn eine Kraft anliegt, die kleiner ist als ein zuvor eingestelltes Gewicht, die Drehung des ersten Arms (300) in der Richtung des Gewichts verhindert wird, und wenn eine Kraft anliegt, die größer ist als ein zuvor eingestelltes Gewicht, die Drehung des ersten Arms (300) in der Richtung des Gewichts zulässig ist.

2. Vorrichtung nach Anspruch 1, wobei ein Verriegelungsteil an dem ersten Arm (300) und/oder dem zweiten Arm (400) in der Richtung der Rückabdeckung (2) des Sitzes vorgesehen ist, und eine Verriegelungseinheit (500) an dem Sitz (1), umfassend die Rückabdeckung (2) entsprechend dem Verriegelungsteil montiert ist, sodass ein Zustand fixiert wird, in dem der Verriegelungsteil an einer zuvor eingestellten Position ausgerichtet und so platziert ist, dass der fixierte Zustand entfernt wird, und das Fixieren der Verriegelungseinheit (500) in Bezug auf den Verriegelungsteil in einem Zustand ausgeführt wird, in dem die Trägerplatte (P) im Innern der Aufnahmeeinheit ausgerichtet und platziert ist.

3. Vorrichtung nach Anspruch 1, wobei der Fixierbügel (100) basierend auf einem Eingriff eines äußeren Bügels (110) und eines inneren Bügels (120) gebildet ist, und der äußere Bügel (110) eine Achseneinführeinheit (111), die nach oben offen ist, umfasst, und eine Eingriffseinheit (113) gebildet ist, die mit der Achseneinführeinheit (111) in der Richtung entsprechend dem Basisrahmen (3) korrespondiert, und der innere Bügel (120) eine Achsenträgereinheit (121) umfasst, die eine Achsenträgerbohrung (121a) aufweist, die aufwärts und abwärts auf dem Oberteil hindurch verläuft, während sie mit der Öffnung der Achseneinführeinheit (111) korrespondiert; und eine Befestigungseinheit (123), die an einer Vorderseite der Achsenträgereinheit (121) nach unten gebogen ist und an einem Abschnitt, der dem Basisrahmen (3) zugewandt ist, in einer abdeckenden Form gebildet ist, während sie mit der Eingriffseinheit (113) korrespondiert, und die Schwenkeinheit (200) eine Schwenkachse (210) umfasst, deren untere Seite durch die Achsenträgerbohrung (121a) verläuft und von der Achsenträgereinheit (121) und der Achseneinführeinheit (111) getragen wird; mindestens eine Tellerfeder, die von der unteren Seite in die Schwenkachse (210) eingeführt ist; eine Unterlegscheibe, die an der Schwenkachse (210) zwischen der Tellerfeder (220) und der unteren Oberfläche der Achsenträgereinheit (121) montiert ist; und eine geriffelt Mutter, die in einer Richtung von der unteren Seite der Schwenkachse (210) zu einem Abschnitt, der gegenüberliegend der unteren Oberfläche der Achsenträgereinheit (121) ist, befestigt ist.

4. Vorrichtung nach Anspruch 2, wobei die Aufnahmeeinheit eine Aufnahmenut umfasst, die zulässt, dass eine Trägerplatte (P) in den Oberteil einer Rückseite der Rückabdeckung (2) eingeführt wird, damit die Trägerplatte (P) nicht nach außen freigelegt ist, und in der Aufnahmenut eine Armeinführnut (2b), in die ein erster Arm (300) und ein zweiter Arm (400) gefaltet eingeführt ist, und eine Bügeleinführnut (2c), in die der Fixierbügel (100) eingeführt ist, gebildet sind.

5. Vorrichtung nach Anspruch 4, wobei der Verriegelungsteil in einer Ring- oder Hakenform gebildet ist, die von der Oberfläche des zweiten Arms (400), der dem ersten Arm (300) zugewandt ist, wenn er gefaltet ist, hervorsteht, und der erste Arm (300) eine Durchgangsbohrung umfasst, durch die ein Teil des Verriegelungsteils hindurch verläuft, wobei der Verriegelungsteil zugewandt ist, wenn der zweite Arm (400) um die zweite Gelenkeinheit (320) gefaltet ist, und die Verriegelungseinheit (500) an einer unteren Seite des Fixierbügels (100) und an dem Basisrahmen (3) an einer Innenseite der Armeinführnut (2b) montiert ist und einen haken- oder ringförmigen Verriegeler umfasst, der von dem Verriegelungsteil verriegelt oder entriegelt ist und in Reaktion auf einen Betrieb, in dem der Verriegelungsteil an einer vorbestimmten Einstellposition platziert ist, elastisch dreht; und eine Betriebseinheit, die mit dem Verriegeler verbunden ist und an dem Sitz (1) derart montiert ist, dass der verriegelte Verriegeler in Bezug auf den Verriegelungsteil entriegelt wird, indem der Verriegeler basierend auf den Betrieb eines Benutzers gedreht wird.

6. Vorrichtung nach Anspruch 1, wobei das Kugelgelenk (600) derart ausgestaltet ist, dass eine Kugelanbringung, die einen kugelförmigen Abschnitt aufweist, an einer vorderen Oberfläche der Trägerplatte (P) gebildet ist, und eine Kugelaufnahmeeinheit (620) vorgesehen ist, die geformt ist, einen Teil des kugelförmigen Abschnitts der Kugelanbringung zu umgeben, oder das Kugelgelenk (600) derart ausgestaltet ist, dass eine Kugelanbringung, die einen kugelförmigen Abschnitt aufweist, an dem anderen Ende des zweiten Arms (400) gebildet ist, und eine Kugelaufnahmeeinheit (620) vorgesehen ist, die an einer vorderen Oberfläche der Trägerplatte (P) gebildet ist, und geformt ist, einen Teil des kugelförmigen Abschnitts der Kugelanbringung zu umgeben.

7. Vorrichtung nach Anspruch 1, wobei die erste Bremseinheit (319) derart ausgestaltet ist, dass sie umfasst:
eine erste Tellerfeder (319a), die in die erste Gelenkachse (315) eingeführt ist, und zulässt, die erste Brücke (317) elastisch mit Druck zu beaufschlagen;
eine Unterlegscheibe (319b), die in die erste Gelenkachse (315) eingeführt ist, sodass sie Abrieb verhindert; und
eine erste geriffelte Mutter (319c), die an einem Ende der ersten Gelenkachse (315) befestigt ist.

8. Vorrichtung nach Anspruch 1, wobei die zweite Gelenkeinheit (320) umfasst:
ein zweites Verbindungselement (321), das an einem Ende der anderen Seite des zweiten Arms (400) gebildet ist,
eine zweite Gelenkachse (325), die mit der Mitte des zweiten Verbindungselements (321) in Eingriff steht,
eine zweite Brücke (327), die in die zweite Gelenkachse (325) eingeführt ist und mit dem zweiten Arm (400) verbunden ist, und
eine zweite Bremseinheit (329), die derart ausgestaltet ist, dass, wenn eine Kraft, die kleiner ist als ein zuvor eingestelltes Gewicht, anliegt, die Drehung des zweiten Arms (400) in der Richtung des Gewichts verhindert wird, und wenn eine Kraft, die größer ist als ein zuvor eingestelltes Gewicht, anliegt, die Drehung des zweiten Arms (400) in der Richtung des Gewichts zugelassen ist.

9. Vorrichtung nach Anspruch 8, wobei die zweite Bremseinheit (329) umfasst:
eine zweite Tellerfeder (329a), die in die zweite Gelenkachse (325) eingeführt ist und zulässt, dass die zweite Brücke (327) elastisch mit Druck beaufschlagt wird,
Unterlegscheiben (329b), die in die zweite Gelenkachse (325) eingeführt sind, sodass Abrieb verringert wird, und
eine zweite geriffelte Mutter (329c), die mit einem Ende der zweiten Gelenkachse in Eingriff ist.

## Revendications

1. Support de type à articulation pour un siège d'un moyen de transport, comprenant :
une console de fixation (100) qui est sur un bâti de base (3) qui forme un siège (1) ;
un couvercle arrière (2) qui permet d'exposer la partie supérieure de la console de fixation (100) à l'extérieur, et comprenant une unité de logement, dans lequel le couvercle arrière (2) est formé au niveau de l'arrière du siège (1) ;
une unité de pivot (200) qui est installée sur la partie supérieure de la console de fixation (100) et est agencée, en rotation, dans une direction horizontale, **caractérisé en ce que** le support comprend en outre :
un premier bras (300) dont l'extrémité est raccordée par le biais d'une première unité de charnière (310) à l'unité de pivot (200) qui fait saillie vers la partie supérieure de la console de fixation (100) et dont l'autre extrémité est agencée, en rotation, dans les directions ascendante et descendante ;
un second bras (400) dont une extrémité est raccordée par le biais d'une seconde unité de charnière (320) à l'autre extrémité du premier bras (300), suite à quoi l'autre extrémité peut être pliée ou dépliée sur le premier bras tout en pouvant tourner vers le haut et vers le bas ; et
une plaque de support (P) dont le côté avant est raccordé par le biais d'un joint à rotule (600) à l'autre extrémité du second bras (400), dans lequel un article est supporté sur son côté arrière, et
dans lequel la première unité de charnière (310) est configurée de sorte qu'elle comprend :
un premier élément de raccordement (311) qui est raccordé avec la partie supérieure de l'arbre de pivot (210) faisant saillie vers la partie supérieure de la console de fixation (100) et est installé au niveau d'une extrémité d'un côté du premier bras (300), le premier élément de raccordement (311) étant formé selon une forme de tuyau unique, dans lequel la direction de la formation de tuyau est horizontale ;
un premier palier d'embrayage (313) qui est installé au niveau du premier élément de raccordement (311) de sorte que si un poids s'applique sur le premier bras (300), la rotation du premier bras (300) est empêchée dans la direction du poids tout en correspondant au poids, et la rotation du premier bras (300) est autorisée dans la direction opposée,
un premier arbre de charnière (315) qui est agencé en passant par le centre du premier palier d'embrayage (313),
un premier pont (317) qui est inséré dans le premier arbre de charnière (315) et est raccordé avec le premier bras (300), et
une première unité de frein (319) qui est configurée de sorte que si une force inférieure à un poids préalablement déterminé s'applique, la rotation du premier bras (300) est empêchée dans la direction du poids, et si une force supérieure à un poids préalablement déterminé s'applique, la rotation du premier bras (300) est autorisée dans la direction du poids.

2. Dispositif selon la revendication 1, dans lequel une partie de verrouillage est prévue au niveau du premier bras (300) et/ou du second bras (400) dans la direction du couvercle arrière (2) du siège, et une unité de verrouillage (500) est installée sur le siège (1) comprenant le couvercle arrière (2) correspondant à la partie de verrouillage afin de fixer un état où la partie de verrouillage est alignée dans une position préalablement déterminée et est mise en place ou afin de supprimer l'état fixé, et la fixation de l'unité de verrouillage (500) par rapport à la partie de verrouillage est réalisée dans un état dans lequel la plaque de support (P) est alignée à l'intérieur de l'unité de logement et est mise en place.

3. Dispositif selon la revendication 1, dans lequel la console de fixation (100) est formée sur la base d'une mise en prise d'une console externe (110) et d'une console interne (120), et la console externe (110) comprend une unité d'insertion d'arbre (111) ouverte vers le haut, et une unité de mise en prise (113) est formée en communiquant avec l'unité d'insertion d'arbre (111) dans la direction correspondant au bâti de base (3), et la console interne (120) comprend une unité de support d'arbre (121) ayant un trou de support d'arbre (121a) traversant vers le haut et vers le bas sur la partie supérieure tout en correspondant à l'ouverture de l'unité d'insertion d'arbre (111) ; et une unité de fixation (123) qui est pliée vers le bas au niveau d'un côté avant de l'unité de support de d'arbre (121) et est formée au niveau d'une partie faisant face au bâti de base (3) selon une forme de recouvrement tout en correspondant à l'unité de mise en prise (113), et l'unité de pivot (200) comprend un arbre de pivot (210) dont le côté inférieur traverse le trou de support d'arbre (121a) et est supporté par l'unité de support d'arbre (121) et l'unité d'insertion d'arbre (111) ; au moins un ressort de disque qui est inséré à partir du côté inférieur dans l'arbre de pivot (210) ; une rondelle qui est installée au niveau de l'arbre de pivot (210) entre le ressort de disque (220) et la surface inférieure de l'unité de support d'arbre (121) ; et un écrou cannelé est fixé dans une direction à partir du côté inférieur de l'arbre de pivot (210) sur une partie qui est opposée à la surface inférieure de l'unité de support d'arbre (121).

4. Dispositif selon la revendication 2, dans lequel l'unité de logement comprend une rainure de logement qui permet d'insérer une plaque de support (P) dans la partie supérieure d'un côté arrière du couvercle arrière (2) de sorte que la plaque de support (P) n'est pas exposée à l'extérieur et dans la rainure de logement, on forme une rainure d'insertion de bras (2b) dans laquelle un premier bras (300) et un second bras (400) sont insérés en étant pliés, et une rainure d'insertion de console (2c) dans laquelle la console de fixation (100) est insérée.

5. Dispositif selon la revendication 4, dans lequel la partie de verrouillage est formée selon une forme de bague ou de crochet faisant saillie de la surface du second bras (400) faisant face au premier bras (300) lorsqu'il est plié, et le premier bras (300) comprend un trou débouchant à travers lequel passe une partie de la partie de verrouillage, dans lequel la partie de verrouillage est orientée en face lors du pliage du second bras (400), autour de la seconde unité de charnière (320), et l'unité de verrouillage (500) est installée au niveau d'un côté inférieur de la console de fixation (100) et au niveau du bâti de base (3) au niveau d'un côté interne de la rainure d'insertion de bras (2b) et comprend un dispositif de verrouillage en forme de crochet ou de bague qui est verrouillé ou déverrouillé de la partie de verrouillage et tourne de manière élastique en réponse à une opération, dans laquelle la partie de verrouillage est placée dans une position de consigne prédéterminée ; et une unité d'actionnement qui est raccordée avec le dispositif de verrouillage et est installée sur le siège (1) afin de déverrouiller le dispositif de verrouillage verrouillé par rapport à la partie de verrouillage en faisant tourner sélectivement le dispositif de verrouillage en fonction de l'opération d'un utilisateur.

6. Dispositif selon la revendication 1, dans lequel le joint à rotule (600) est configuré de sorte que la partie de montage de rotule ayant une partie en forme de rotule est formée sur une surface avant de la plaque de support (P), et on prévoit une unité de logement de rotule (620) qui est formée pour entourer une partie de la partie en forme de rotule du dispositif de montage de rotule ou le joint à rotule (600) est configuré de sorte qu'un dispositif de montage de rotule ayant une partie en forme de rotule est formé sur l'autre extrémité du second bras (400), et on prévoit une unité de logement de rotule (620) qui est formée sur une surface avant de la plaque de support (P) et est formée afin d'entourer une partie de la partie en forme de rotule du dispositif de montage de rotule.

7. Dispositif selon la revendication 1, dans lequel la première unité de frein (319) est configurée de sorte qu'elle comprend :
un premier ressort de disque (319a) qui est inséré dans le premier arbre de charnière (315) et permet de mettre élastiquement sous pression le premier pont (317) ;
une rondelle (319b) qui est insérée dans le premier arbre de charnière (315) afin d'empêcher toute abrasion ; et
un premier écrou cannelé (319c) qui est fixé sur une extrémité du premier arbre de charnière (315).

8. Dispositif selon la revendication 1, dans lequel la seconde unité de charnière (320) comprend :
un second élément de raccordement (321) qui est formé au niveau d'une extrémité de l'autre côté du second bras (400),
un second arbre de charnière (325) qui est mis en prise avec le centre du second élément de raccordement (321),
un second pont (327) qui est inséré dans le second arbre de charnière (325) et est raccordé avec le second bras (400), et
une seconde unité de frein (329) configurée de sorte que si une force inférieure à un poids préalablement déterminé s'applique, la rotation du second bras (400) est empêchée dans la direction du poids, et si une force supérieure à un poids préalablement déterminé s'applique, la rotation du second bras (400) est autorisée dans la direction du poids.

9. Dispositif selon la revendication 8, dans lequel la seconde unité de frein (329) comprend :
un second ressort de disque (329a) qui est inséré dans le second arbre de charnière (325) et permet de mettre élastiquement sous pression le second pont (327),
des rondelles (329b) qui sont insérées dans le second arbre de charnière (325) afin de réduire l'abrasion, et
un second écrou cannelé (329c) qui est mis en prise avec une extrémité du second arbre de charnière.
